# EUROPEAN PATENT APPLICATION

(11) **EP 4 583 249 A1**
(43) Date of publication of application: **09.07.2025**
(21) Application number: 24219077.5
(22) Date of filing: 11.12.2024
(51) Int. Cl.: H01M 10/613, H01M 10/6556, H01M 10/6557, H01M 50/209, H01M 10/6568

(54) **BATTERY MODULE AND BATTERY PACK**

(30) Priority: 04.01.2024 CN 202420028791 U
(71) Applicant: Eve Energy Co., Ltd., Huizhou, Guangdong 516006 (CN)
(72) Inventor: CHEN, Shanda, Huizhou, Guangdong, 516006 (CN); HUANG, Xiaobin, Huizhou Guangdong, 516006 (CN); ZHOU, Hongquan, Huizhou, Guangdong (CN); LIAO, Lei, Huizhou, Guangdong, 516006 (CN)
(74) Representative: Herrero & Asociados, S.L.

(57) **Abstract**

A battery module (100) and a battery pack (1000) employing the battery module are provided. The battery module includes a cell (2) and a heat-dissipation and pressure-relief component (1). The heat-dissipation and pressure-relief component (1) is provided with a liquid-cooling partition (11) and a smoke-exhaust and pressure-relief portion (12). The smoke-exhaust and pressure-relief portion (12) is provided with a pressure-relief channel (13) and an exhaust port (14) communicating with the pressure-relief channel (13). The liquid-cooling partition (11) is arranged at one side of the pressure-relief channel (13) and is vertically connected to the smoke-exhaust and pressure-relief portion (12). The thickness dimensions H1 of two supporting side walls (131) of the pressure-relief channel (13) are both between 5 millimeter to 10 millimeters. An explosion-proof valve (21) of the cell (2) is arranged corresponding to the exhaust port (14), and the cell (2) exchanges heat with the liquid-cooling partition (11).

## Description

### TECHNICAL FIELD

The present disclosure relates to the technology field of batteries, and in particular, to a battery module and a battery pack.

### BACKGROUND

In related technologies of battery packs, in order to dissipate heat from a cell and relieve pressure caused by thermal runaway occurred in the cell, liquid-cooling plates are usually provided on side surfaces of the cell, and special pressure-relief channels are arranged in a spraying direction of an explosion-proof valve of the cell. These pressure-relief channels are usually arranged in an independently arranged pressure-relief plate.

In this way, during the installation of the cell, an exhaust port of the pressure-relief plate and the explosion-proof valve of the cell need to be installed in alignment. At the same time, the liquid-cooling plate needs to be adjusted according to the position adjustment of the cell, which will result in a long time required for installation and adjustment of the cell, leading to low efficiency. While when the liquid-cooling plate and the pressure-relief plate are integrally formed, due to the pressure-relief channels provided inside the pressure-relief plate, and liquid-cooling channels provided inside the liquid-cooling plate, a junction between the pressure-relief plate and the liquid-cooling plate only has the wall thickness of the liquid-cooling channel or the wall thickness of the pressure-relief channel. While gas and substances released by the cell under a thermal runaway state all have a large amount of heat, which results in a risk of damage to the junction between the pressure-relief plate and the liquid-cooling plate when the junction is subjected to thermal shock from the high-temperature gas and high-temperature substances.

### SUMMARY

In a first aspect, the present disclosure provides a battery module which includes a cell and a heat-dissipation and pressure-relief component. The heat-dissipation and pressure-relief component includes a liquid-cooling partition and a smoke-exhaust and pressure-relief portion. The smoke-exhaust and pressure-relief portion is provided with a pressure-relief channel and an exhaust port in communication with the pressure-relief channel. The liquid-cooling partition is arranged at one side of the pressure-relief channel, and the liquid-cooling partition is vertically connected to the smoke-exhaust and pressure-relief portion. The thickness dimensions of the two supporting side walls of the pressure-relief channel are both between 5 millimeters and 10 millimeters. The exhaust port is arranged corresponding to an explosion-proof valve of the cell. The cell exchanges heat with the liquid-cooling partition.

In a second aspect, the present disclosure further discloses a battery pack including the battery module provided by the present disclosure.

In the battery module and the battery pack provided by the present disclosure, the liquid-cooling partition is provided at one side of the pressure-relief channel, and the thickness dimension of the supporting side wall of the pressure-relief channel is between 5 millimeters and 10 millimeters, so that the overall structure of the heat-dissipation and pressure-relief component is made relatively firm and stable, thereby avoiding the risk that significant concentrated stress at the junction between the liquid-cooling partition and the smoke-discharging and pressure-relief portion, which could easily damage the location when subjected to thermal shock from high-temperature gas and high-temperature substances. This ensures the effectiveness and stability of the heat dissipation and pressure relief function of the pressure-relief channel, and also avoids the risk of blockage of the pressure-relief channel caused by the accumulation of the high-temperature substances in the pressure-relief channel.

### BRIEF DESCRIPTION OF THE DRAWINGS

FIG. 1 is a schematic diagram of an overall structure of heat-dissipation and pressure-relief component of a battery module according to some embodiments of the present disclosure.
FIG. 2 is a partial structural schematic diagram of the heat-dissipation and pressure-relief component according to some embodiments of the present disclosure.
FIG. 3 is an assembly diagram of a liquid-cooling connector and an external pipe element according to some embodiments of the present disclosure.
FIG. 4 is a structural schematic diagram of a battery module according to some embodiments of the present disclosure.
FIG. 5 is a structural schematic diagram of a cell according to some embodiments of the present disclosure.
FIG. 6 is a schematic diagram of a battery pack according to some embodiments of the present disclosure.

Reference numerals in the drawings: 1000, battery pack; 100, battery module; 2, cell; 21, explosion-proof valve; 1, heat-dissipation and pressure-relief component; 11, liquid-cooling partition; 111, heat exchange plate; 112, heat exchange channel; 12, smoke-exhaust and pressure-relief portion; 13, pressure-relief channel; 131, supporting side wall; 14, exhaust port; 15, supporting partition wall; 161, first connection portion; 162, second connection portion; 17, liquid-cooling connector; 171, liquid-cooling inner cavity; 172, flow guide plate; 18, external pipe element.

### DETAILED DESCRIPTION

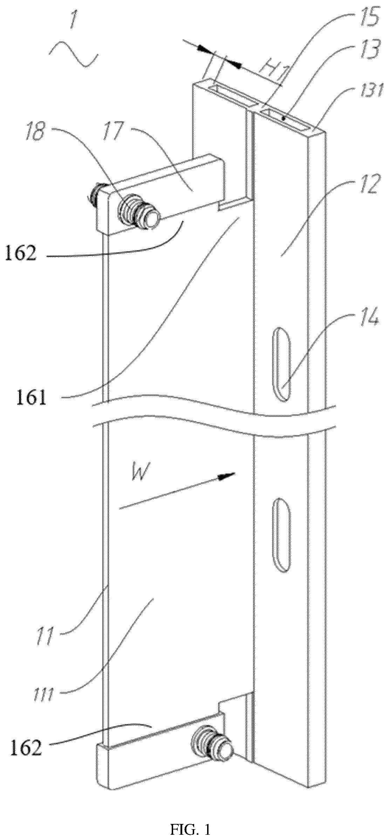

Specifically, as shown in FIGS. 1 to 5, the present disclosure discloses a battery module 100, which includes a cell 2 and a heat-dissipation and pressure-relief component 1. The cell 2 can be a square-type battery, a cylindrical-type battery, or a prismatic battery, and the largest side surface of the cell 2 is a large battery surface. The heat-dissipation and pressure-relief component 1 includes a liquid-cooling partition 11 and a smoke-exhaust and pressure-relief portion 12. The liquid-cooling partition 11 and the smoke-exhaust and pressure-relief portion 12 are integrally formed or separately arranged. The smoke-exhaust and pressure-relief portion 12 is provided with a pressure-relief channel 13 and an exhaust port 14 in communication with the pressure-relief channel 13. As shown in FIGs. 1, 4 and 5, the shape and size of the exhaust port 14 are respectively adapted to the shape and size of an explosion-proof valve 21 of the cell 2. The explosion-proof valve 21 of the cell 2 is arranged corresponding to the exhaust port 14. Therefore, when the cell 2 is in a thermal runaway state, high-temperature gas, smoke, and high-temperature substances released by the cell 2 can enter the pressure-relief channel 13 through the exhaust port 14, and then flow and discharge in an orderly manner under the guidance of the pressure-relief channel 13, thereby preventing the battery module 100 from experiencing secondary short circuits or arcing.

In some embodiments, the liquid-cooling partition 11 is arranged at one side of the pressure-relief channel 13, and the liquid-cooling partition 11 is fixed to a supporting side wall 131 of the pressure-relief channel 13, which helps to ensure the overall structural strength of the heat-dissipation and pressure-relief component 1. The liquid-cooling partition 11 is vertically connected to the smoke-exhaust and pressure-relief portion 12. When the cell 2 is assembled on the heat-dissipation and pressure-relief component 1, the large battery surface of the cell 2 is attached to and in contact with the liquid-cooling partition 11, so as to ensure maximum efficiency of heat exchange between the cell 2 and the liquid-cooling partition 11, so that a large amount of heat released by the cell 2 in any one or a combination of two of normal charging and discharging states and thermal runaway states can be transferred to the liquid-cooling partition 11, achieving heat exchange between the cell 2 and the liquid-cooling partition 11, and finally quickly evacuated and eliminated through the liquid-cooling partition 11, so that the risk of thermal spreading in the battery module 100 is avoided.

In some embodiments, the thickness dimensions H1 of two supporting side walls 131 of the pressure-relief channel 13 are both between 5 millimeters and 10 millimeters. If the thickness dimension H1 of the supporting side wall 131 is less than 5 millimeters, the thickness dimension H1 of the supporting side wall 131 is excessively thin, when the thermal runaway occurs in the cell 2, the high-temperature gas released by the cell 2 or the high-temperature substances sprayed by the cell 2 can easily cause thermal shock to the supporting side wall 131, which can easily damage the pressure-relief channel 13, and cause the high-temperature gas and even the high-temperature substances to flow out of the damaged area, resulting in thermal spread in the battery module 100. In addition, it also makes it difficult to form the supporting side wall 131 during the process of manufacturing the heat-dissipation and pressure-relief component 1, which increases the difficulty in manufacturing the heat-dissipation and pressure-relief component 1. At the same time, since the supporting side wall 131 also needs to bear the weight of at least one cell 2, if the supporting side wall 131 is excessively thin, it is easy to crush the supporting side wall 131, thereby destroying the structures of the pressure-relief channel 13 and the heat-dissipation and pressure-relief component 1, causing the pressure-relief channel 13 to lose its functions of directional discharge of smoke and high-temperature gases. While if the thickness dimension H1 of the supporting side wall 131 is greater than 10 millimeters, the thickness dimension H1 of the supporting side wall 131 is excessively thick, which not only increases the weight of the heat-dissipation and pressure-relief component 1, but also increases the overall weight of the battery module 100 and the battery pack, which is not conductive to the light-weight design of the battery. At the same time, the unit flow area of the pressure-relief channel 13 is compressed, which easily leads to a risk of blockage caused by the accumulation of high-temperature substances sprayed by the cell 2 in the pressure-relief channel 13, resulting in the failure of heat dissipation and pressure relief functions of the pressure-relief channel 13, and leading to a more serious risk of thermal runaway and thermal spread of the battery module 100.

The supporting side wall 131 has a thickness between 5 millimeters and 10 millimeters, which can not only ensure the structural strength of the supporting side wall 131 and the heat-dissipation and pressure-relief component 1, reduce or even avoid the risk of damage caused by thermal shock, but also avoid the risk of blockage caused by the accumulation of the high-temperature substances in the pressure-relief channel 13, thereby ensuring the effectiveness of the heat dissipation and pressure relief functions of the pressure-relief channel 13, and well ensuring the stability and the safety of of the battery module 100 and the battery pack in use. The thickness dimension H1 of the supporting side wall 131 is 6 millimeters, 7 millimeters or 8 millimeters.

It should be noted that, the thickness dimension of the supporting side wall 131 may also be adjusted and selected within a dimension range of 5 millimeters to 10 millimeters according to the capacitance of the (passenger car) cell. That is, when the capacitance of the cell is small, a smaller dimension within the range may be selected, for example, a dimension of 5 millimeters may be selected, while when the capacitance of the cell is large, a larger dimension within the range may be selected, for example, a dimension of 10 millimeters may be selected.

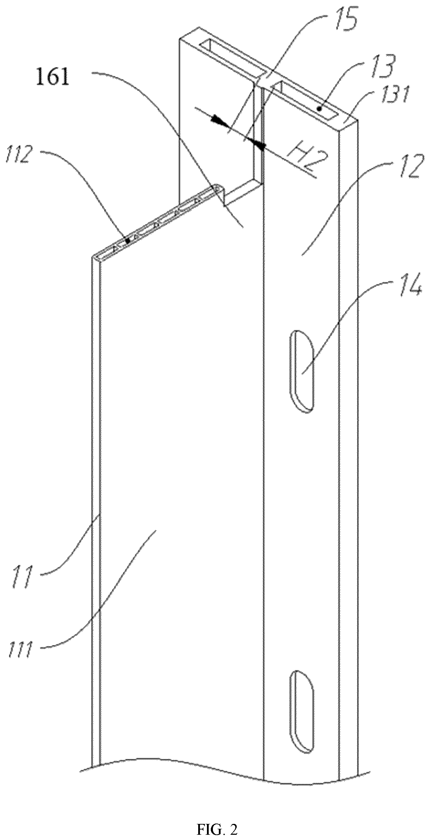

In some embodiments, as shown in FIGS. 1 and 2, the smoke-exhaust and pressure-relief portion 12 is provided with two pressure-relief channels 13 and a supporting partition wall 15 arranged between the two pressure-relief channels 13. The supporting partition wall 15 herein is a solid structure. The liquid-cooling partition 11 is arranged between the two pressure-relief channels 13, and the liquid-cooling partition 11 is fixed to the supporting partition wall 15, thereby effectively ensuring the overall structural strength of the heat-dissipation and pressure-relief component 1, and facilitating producing same.

As shown in FIG. 2, a thickness dimension H2 of the supporting partition wall 15 is between 3 millimeters and 6 millimeters. If the thickness dimension H2 of the supporting partition wall 15 is less than 3 millimeters, the thickness dimension H2 of the supporting partition wall 15 is excessively thin. When thermal runaway occurs in the cell, the released high-temperature gas or the sprayed high-temperature substance from the cell easily causes thermal shock to the supporting partition wall 15, and damages to the pressure-relief channel 13, resulting in that the high-temperature gas, even the high-temperature substance, flows into the adjacent pressure-relief channel 13, thereby causing a risk of thermal spreading in the battery module 100. In addition, it also make it difficult to form the supporting partition wall 15 during the process of manufacturing the heat-dissipation and pressure-relief component 1, which increases the difficulty in manufacturing the heat-dissipation and pressure-relief component 1.

While if the thickness dimension H2 of the supporting partition wall 15 is greater than 6 millimeters, the thickness dimension H2 of the supporting partition wall 15 is excessively thick, which not only increases the weight of the heat-dissipation and pressure-relief component 1, but also increases the overall weight of the battery module 100 and the battery pack, which is not conductive to the light-weight design of the battery. At the same time, the unit flow area of the pressure-relief channel 13 is also compressed, which easily leads to a risk of blockage caused by the accumulation of high-temperature substances sprayed by the cell 2 in the pressure-relief channel 13, resulting in the failure of the heat dissipation and pressure relief functions of the pressure-relief channel 13, leading to a more serious risk of thermal runaway and thermal spread in the battery module 100.

The thickness dimension H2 of the supporting partition wall 15 is between 3 millimeters and 6 millimeters, which can not only ensure the structural strength of the supporting partition wall 15 and the heat-dissipation pressure relief member 1, reduce or even avoid the risk of damage caused by thermal shock, but also avoid the risk of blockage caused by the accumulation of high-temperature substances in the pressure-relief channel 13, thereby ensuring the effectiveness of the heat dissipation and pressure relief functions of the pressure-relief channel 13, and well ensuring the stability and the safety of the battery module 100 and the battery pack in use. The thickness dimension H2 of the supporting partition wall 15 is 5 millimeters.

In some embodiments, as shown in FIG. 2, the liquid-cooling partition 11 is provided with a heat exchange plate 111 and a plurality of heat exchange channels 112. The heat exchange plate 111 is a side surface of the liquid-cooling partition 11 having the largest area and exchanging heat with the cell 2. A direction in which the heat exchange plate 111 perpendicular to the smoke-exhaust and pressure-relief portion 12 is a width direction W of the heat exchange plate 111, and the plurality of heat exchange channels 112 are arranged along the width direction W of the heat exchange plate 111.

In this way, the heat exchange medium flows inside the heat exchange channel 112. The heat exchange medium herein may be water or cooling liquid. The large battery surface of the cell 2 is in abutting contact with the heat-exchanging plate 111 of the liquid-cooling partition 11, so that a large amount of heat released by the cell 2 is transferred to the heat-exchanging medium through the heat-exchanging plate 111 of the liquid-cooling partition 11. With the flow of the heat-exchanging medium, the large amount of heat can be quickly discharged out of the heat-dissipation and pressure-relief component 1, thereby achieving the purpose of effective heat dissipation.

In some embodiments, as shown in FIGS. 1 and 2, one side of the liquid-cooling partition 11 close to the smoke-exhaust and pressure-relief portion 12 is provided with a first connection portion 161. The first connection portion 161 extends along the extending direction of the heat exchange channel 112, and the length dimension of the first connection portion 161 extending towards the width direction W of the heat exchange plate 111 is not limited herein. The liquid-cooling partition 11 is connected to the smoke-exhaust and pressure-relief portion 12 through the first connection portion 161. The connection mentioned here may be a fixed connection, such as welding connection, integrated molding, or a detachable connection, such as plugging, clamping, etc.

In this way, under the action of the first connection portion 16, the connection strength between the liquid-cooling partition 11 and the smoke-exhaust and pressure-relief portion 12 can be improved, thereby avoiding the risk of fracture at the junction between the liquid-cooling partition 11 and the smoke-exhaust and pressure-relief portion 12 caused by the concentrated stress generated by the vertical connection between the liquid-cooling partition 11 and the smoke-exhaust and pressure-relief portion 12, and improving the overall structural strength of the heat-dissipation and pressure-relief component 1.

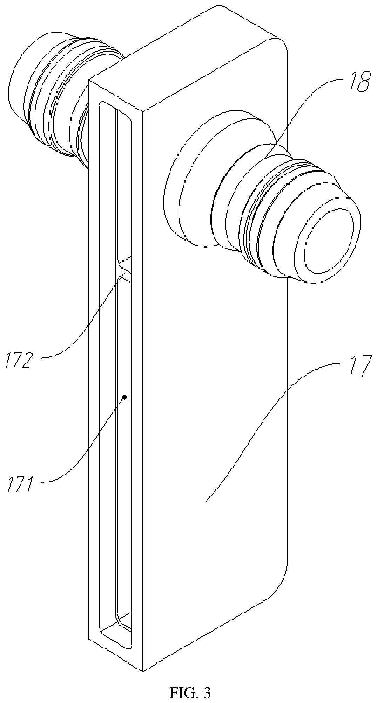

In order to convey an external cooling medium into the heat exchange channel 112 of the liquid-cooling partition 11, as shown in FIGS. 1 and 3, the heat-dissipation and pressure-relief component 1 further includes a liquid-cooling connector 17 provided with a liquid-cooling inner cavity 171, and an external pipe element 18 provided on the liquid-cooling connector 17. The liquid-cooling connector 17 is detachably connected to the liquid-cooling partition 11, and the heat exchange channel 112 is in communication with the external pipe element 18 through the liquid-cooling inner cavity 171.

Specifically, the liquid-cooling partition 11 is further provided with a second connection portion 162 arranged in the extending direction of the heat exchange channel 112, allowing the liquid-cooling connector 17 to be more easily and conveniently plugged into the liquid-cooling partition 11. In order to strengthen the connection between the liquid-cooling connector 17 and the liquid-cooling partition 11, to make the liquid-cooling connector 17 be not easily separated from the liquid-cooling partition 11, one of the inner cavity wall of the liquid-cooling inner cavity 171 and the liquid-cooling partition 11 can be provided with a snap protrusion, while the other one of the inner cavity wall of the liquid-cooling inner cavity 171 and the liquid-cooling partition 11 can be provided with a snap groove, and the snap protrusion is snap-fitted in the snap groove.

In this way, the heat exchange medium flows from the liquid-cooling connector 17 into the liquid-cooling inner cavity 171, and then flows into the heat exchange channel 112. In some embodiments, the liquid-cooling connector 17 is further provided with a flow guide plate 172 arranged in the liquid-cooling inner cavity 171, so as to enable adjacent heat exchange channels 112 to be communicated end to end, and the plurality of heat exchange channels 112 can be formed into a serpentine pipe by means of the flow guide plate 172, and the heat exchange medium can flow from bottom to top along the width direction W of the heat exchange plate 111. Alternatively, the heat exchange medium will be able to flow from top to bottom along the width direction W of the heat exchange plate 111. Thus, the flow path of the heat exchange medium is greatly increased, and the heat exchange time between the heat exchange medium and the cell is prolonged, thus, the utilization rate of the heat exchange medium is effectively improved.

AIn some embodiments, as shown in FIGS. 1 and 2, the amount of the exhaust ports 14 is multiple. The multiple exhaust ports 14 are evenly arranged along the extending direction of the pressure-relief channel 13. Therefore, when multiple cells 2 are configured, the exhaust ports 14 are arranged in one-to-one correspondence with the explosion-proof valves 21 of the cells 2. When thermal runaway occurs in any one of the cells 2, the high-temperature gas, the smoke and the high-temperature substances can be released into the pressure-relief channel 13, and then can be discharged to the outside of the heat-dissipation and pressure-relief component 1 of the battery module 100 through the guidance of the pressure-relief channel 13.

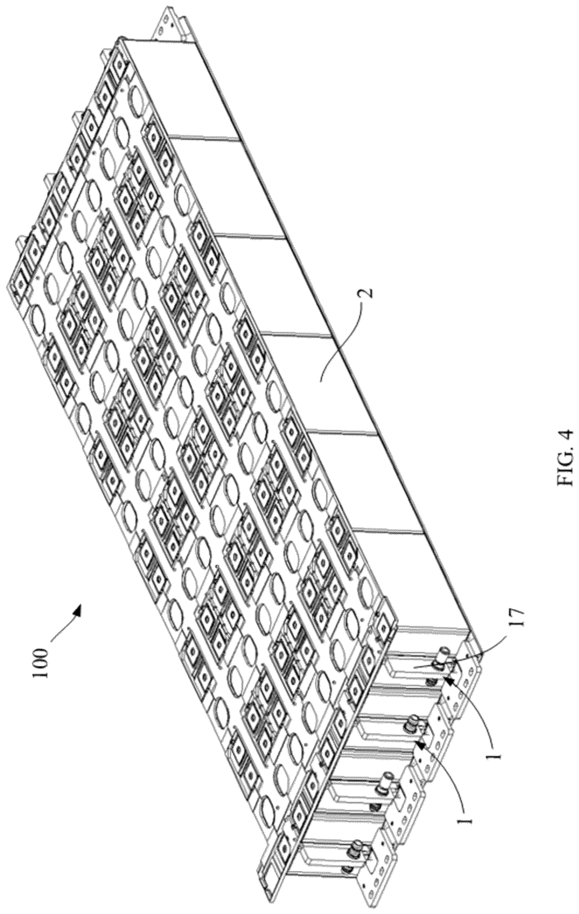

In some embodiments, as shown in FIG. 4, the battery module 100 may include multiple heat-dissipation and pressure-relief components 1 and multiple cells 2 mounted on the heat-dissipation and pressure-relief components 1. The plurality of exhaust ports 14 are correspondingly arranged on the smoke exhaust pressure portion 12, and the exhaust ports 14 are arranged in one-to-one correspondence with the explosion-proof valves of the cells 2. The plurality of heat-dissipation and pressure-relief components 1 are arranged in sequence, and the pressure-relief channels 13 of two adjacent heat-dissipation and pressure-relief components 1 are in communication with each other.

The sequential arrangement herein should be understood as that the plurality of heat-dissipation and pressure-relief components 1 are sequentially arranged along a direction perpendicular to the heat-exchange plate 111 of the liquid-cooling partition 11, so that the heat-exchange plates 111 of the plurality of heat-dissipation and pressure-relief components 1 are parallel to each other. When the plurality of heat-dissipation and pressure-relief components 1 are arranged in sequence, the cells 2 assembled on two adjacent heat-dissipation and pressure-relief components 1 may be in abutting contact with each other, and a heat-insulating plate may be further provided between the cells 2 assembled on the two adjacent heat-dissipation and pressure-relief components 1 arranged side by side.

Specifically, the external pipe elements 18 of two adjacent heat-dissipation and pressure-relief components 1 may be connected together through connecting pipes. The connecting pipe members here may be self deformed, so that the connecting pipe member can be adjusted according to the spacing between the liquid-cooling connectors 17 of the two adjacent heat-dissipation and pressure-relief components 1. The connecting pipe here can also be selected as a pipe provided with an adjustment structure. The adjustment structure is configured to perform telescopic adjustment in an axial direction of the connecting pipe, and can also be adjusted according to the spacing between the liquid-cooling connectors 17 of the two adjacent heat-dissipation and pressure-relief components 1.

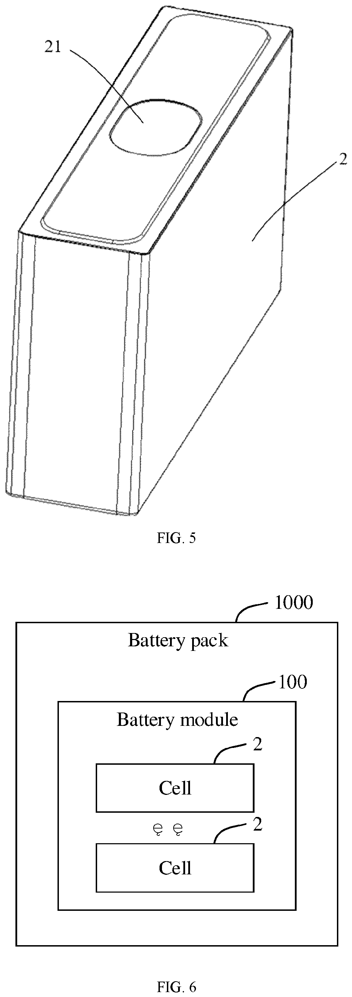

As shown in FIG. 6, the present disclosure further provides a battery pack 1000, which includes the battery module 100 provided by the above-mentioned embodiments of the present disclosure.

## Claims

1. A battery module (100), comprising:
a cell (2); and
a heat-dissipation and pressure-relief component (1) comprising a liquid-cooling partition (11) and a smoke-exhaust and pressure-relief portion (12); wherein the smoke-exhaust and pressure-relief portion (12) is provided with a pressure-relief channel (13) and an exhaust port (14) in communication with the pressure-relief channel (13); the liquid-cooling partition (11) is arranged at one side of the pressure-relief channel (13), and the liquid-cooling partition (11) is vertically connected to the smoke-exhaust and pressure-relief portion (12); thickness dimensions of two supporting side walls (131) of the pressure-relief channel (13) are both between 5 millimeters and 10 millimeters; and the exhaust port (14) is arranged corresponding to an explosion-proof valve (21) of the cell (2); and the cell (2) exchanges heat with the liquid-cooling partition (11).

2. The battery module (100) according to claim 1, wherein the smoke-exhaust and pressure-relief portion (12) is provided with two pressure-relief channels (13) and a supporting partition wall (15) arranged between the two pressure-relief channels (13); a thickness dimension of the supporting partition wall (15) is between 3 millimeters and 6 millimeters; the liquid-cooling partition (11) is arranged between the two pressure-relief channels (13), and is fixed to the supporting partition wall (15).

3. The battery module (100) according to claim 1 or 2, wherein the liquid-cooling partition (11) is provided with a heat exchange plate (111) and a plurality of heat exchange channels (112); wherein a direction in which the heat exchange plate (111) perpendicular to the smoke-exhaust and pressure-relief portion (12) is a width direction of the heat exchange plate (111), and the plurality of heat exchange channels (112) are arranged along the width direction of the heat exchange plate (111).

4. The battery module (100) according to claim 3, wherein one side of the liquid-cooling partition (11) close to the smoke-exhaust and pressure-relief portion (12) is provided with a first connection portion (161); wherein the liquid-cooling partition (11) is connected to the smoke-exhaust and pressure-relief portion (12) through the first connection portion (161).

5. The battery module (100) according to claim 3, wherein the heat-dissipation and pressure-relief component (1) further comprises a liquid-cooling connector (17) provided with a liquid-cooling inner cavity (171), and an external pipe element (18) provided on the liquid-cooling connector (17); wherein the liquid-cooling connector (17) is detachably connected to the liquid-cooling partition (11), and the heat exchange channel (112) is in communication with the external pipe element (18) through the liquid-cooling inner cavity (171).

6. The battery module (100) according to claim 5, wherein the liquid-cooling partition (11) is further provided with a second connection portion (162) arranged in an extending direction of the heat exchange channel (112); wherein the liquid-cooling connector (17) is plugged into the liquid-cooling partition (11) through the second connection portion (162).

7. The battery module (100) according to claim 5, wherein the liquid-cooling connector (17) is further provided with a flow guide plate (172) arranged in the liquid-cooling inner cavity (171); wherein the plurality of heat exchange channels (112) are formed into a serpentine pipe by means of the flow guide plate (172).

8. The battery module (100) according to claim 1 or 2, wherein the amount of the exhaust port (14) is multiple, and multiple exhaust ports (14) are evenly arranged along an extending direction of the pressure-relief channel (13).

9. The battery module (100) according to claim 1 or 2, wherein the amount of the heat-dissipation and pressure-relief component (1) is multiple, and the amount of the cell (2) is multiple; wherein the multiple cells (2) are mounted on the multiple heat-dissipation and pressure-relief components (1); the multiple heat-dissipation and pressure-relief components (1) are arranged in sequence, and the pressure-relief channels (13) of two adjacent heat-dissipation and pressure-relief components (1) are in communication with each other.

10. The battery module (100) according to claim 9, wherein the cells (2) assembled on two adjacent heat-dissipation and pressure-relief components (1) are in abutting contact with each other; a heat-insulating plate is provided between the cells (2) assembled on the two adjacent heat-dissipation and pressure-relief components (1) arranged side by side.

11. The battery module (100) according to claim 5, wherein the amount of the heat-dissipation and pressure-relief component (1) is multiple, and the amount of the cell (2) is multiple; wherein the multiple cells (2) are mounted on the multiple heat-dissipation and pressure-relief components (1); the multiple heat-dissipation and pressure-relief components (1) are arranged in sequence, and the pressure-relief channels (13) of two adjacent heat-dissipation and pressure-relief components (1) are in communication with each other; the external pipe elements (18) of two adjacent heat-dissipation and pressure-relief components (1) are connected together through connecting pipes.

12. The battery module (100) according to any one of claims 1 to 11, wherein the shape and size of the exhaust port (14) are respectively adapted to the shape and size of the explosion-proof valve (21) of the cell (2).

13. The battery module (100) according to any one of claims 1 to 11, wherein the liquid-cooling partition (11) is fixed to one of the two supporting side walls (131) of the pressure-relief channel (13).

14. The battery module (100) according to claim 2, wherein the liquid-cooling partition (11) is fixed to the supporting partition wall (15).

15. A battery pack (1000), comprising the battery module according to any one of claims 1 to 14.
